# EUROPÄISCHE PATENTSCHRIFT

(11) **EP 1 908 988 B1**
(45) Veröffentlichungstag und Bekanntmachung des Hinweises auf die Patenterteilung: **30.06.2010**
(21) Anmeldenummer: 07019120.0
(22) Anmeldetag: 28.09.2007
(51) Int. Cl.: F16F 13/14

(54) **Außenrohr für eine elastische Lagerbuchse mit hydraulischer Dämpfung**
Exterior sleeve for an elastic bush with hydraulic damping
Tube extérieur pour un coussinet élastique à amortissement hydraulique

(30) Priorität: 07.10.2006 DE 102006047444
(43) Veröffentlichungstag der Anmeldung: 09.04.2008
(73) Patentinhaber: Jörn GmbH, 71336 Waiblingen (DE)
(72) Erfinder: Seck, Gerhard, 73630 Remshalden (DE); Zawadzki, Bernd, 71409 Schwaikheim (DE); Sprang, Rüdiger, 53125 Bonn (DE)
(74) Vertreter: Liebl, Thomas

(56) Entgegenhaltungen:
- EP-A- 1 270 987
- DE-A1- 10 227 978
- US-A1- 2001 024 006

## Beschreibung

Die Erfindung betrifft ein Außenrohr für elastische Lagerbuchsen mit hydraulischer Dämpfung, welche insbesondere für Lagerungen in einem Kraftfahrzeug oder als Maschinenlagerung geeignet sind, nach dem Oberbegriff des Anspruchs 1.

Ein gattungsgemäßes Außenrohr ist aus der DE 199 37 714 A1 bekannt. Die fertige elastische Lagerbuchse mit hydraulischer Dämpfung besteht aus einem Innenteil zur Verbindung mit einem ersten zu lagernden Bauteil und dem Außenrohr sowie aus einem Elastomerkörper zwischen dem Innenteil und dem Außenrohr. Zudem weist eine solche Lagerbuchsen zwei radial gegenüberliegende, mit hydraulischer Flüssigkeit gefüllte Arbeitskammern auf, die durch zugeordnete Aussparungen im Außenrohr und im Elastomerkörper sowie durch eine flüssigkeitsdicht abschließende Außenhülse gebildet sind. Die zwei Arbeitskammern sind durch einen Strömungskanal miteinander verbunden. Das gattungsgemäße Außenrohr ist als einteiliges Käfigteil ausgebildet, mit jeweils einem stirnseitig umlaufend geschlossenen Stützringteil und mit zwei radial gegenüberliegenden, die Stützringteile axial verbindenden Rohrstegteilen, wobei zwischen den Rohrstegteilen die Aussparungen für die Arbeitskammern gebildet sind und die Rohrstegteile dem Elastomerkörper zugeordnet sind.

Bei oszilierender Ein- und Ausfederung wird eine Änderung des Volumens mit einer Änderung des Drucks in den Arbeitskammern erzeugt, wodurch Flüssigkeit von der einen Arbeitskammer durch den Strömungskanal in die andere Arbeitskammer und zurück verdrängt wird, was ein gewünschtes Dämpfungsverhalten ergibt.

Bei der Einleitung von oszilierenden Kräften durch die zu lagernden Komponenten auf das Innenteil, erfährt der Elastomerkörper eine statische und dynamische Verformung in Verbindung mit einer wechselweisen Druck- und Zugbeanspruchung. Zugbelastungen können den Elastomerkörper und damit die Lagerfunktion beeinträchtigen und durch Beschädigungen zum Ausfall des Lagers führen. Es ist allgemein bekannt, zur Kompensation solcher Zugspannungen den Elastomerkörper mit einer Vorspannung zu versehen:

Die Lagerbuchse nach der DE 199 37 714 A1 wird einschließlich des Außenrohrs zunächst mit einem elliptischen Querschnitt hergestellt. In einem zusätzlichen weiteren Arbeitsschritt wird in einer Vorrichtung mittels Kalibrierung eine Umformung, auch des Außenrohrs, in einen kreisrunden Durchmesser in Verbindung mit einer Reduzierung des Außendurchmessers durchgeführt, wodurch eine Vorspannung aufgebracht wird. Diese Maßnahme erfordert den aufwendigen zusätzlichen Arbeitsschritt der Kalibrierung.

Weiter ist eine elastische Lagerbuchse mit hydraulischer Dämpfung bekannt (DE 103 51 229 A1), bei der das Außenrohr aus einzelnen Teilstücken, nämlich zwei jeweils stirnseitigen Stützringteilen und einem separaten Mittelteil gebildet ist. Das Mitteilteil wird beim Aufbringen der Außenhülse radial nach innen verspannt wird. Bei dieser Verformung sind die stirnseitigen Stützringteile jeweils durch einen Spalt vom separaten Mittelteil entkoppelt und werden in gewünschter Weise nicht unkontrolliert mitverformt, so dass die dortigen Dichtflächen und Dichtlippen zur Außenhülse hin nicht ungünstig beeinflusst werden. Diese Aufteilung des Außenrohrs in mehrere separate Rohrteile führt aber zu einem erhöhten Aufwand bei der Vulkanisation, da diese separaten Teile einzeln in die Vulkanisierform eingebracht und dort lagerichtig gehalten werden müssen.

Weiter offenbart Dokument US 2001/024006 A1 alle Merkmale des Oberbegriffs des Anspruchs 1.

Aufgabe der Erfindung ist es, eine gattungsgemäßes Außenrohr für eine elastische Lagerbuchse mit hydraulischer Dämpfung so weiterzubilden, dass damit einfach und kostengünstig eine Vorspannung im Elastomerkörper der Lagerbuchse herstellbar ist.

Diese Aufgabe wird mit den Merkmalen des Anspruchs 1 gelöst.

Gemäß Anspruch 1 ist in den Rohrstegteilen jeweils wenigstens ein Fenster angebracht, dem wenigstens ein Druckelement zugeordnet ist, wobei das Druckelement in der Art eines Fensterdeckels unter Verwendung des Rohrsteg-Fensterabschnitts gebildet ist, der vorzugsweise im Elastomermaterial einformbar ist und vor dem Aufstecken der Außenhülse durch eine nach radial außen weisende Biegung und/oder aufgebrachtes Elastomermaterial eine gegenüber dem Innendurchmesser der aufsteckbaren Außenhülse radiale Auswölbung aufweist, so dass beim Aufstecken der Außenhülse der Fensterdeckel nach radial innen unter Aufbringung einer Vorspannung im Elastomerkörper verlagerbar ist, ohne dabei die Stützringteile und/oder Rohrstegteile unzulässig mit zu verformen.

Das Außenrohr kann einfach hergestellt und als einteiliges Käfigteil in eine Vulkanisierform eingebracht und gehalten werden, so dass eine kostengünstige Herstellung der Lagerbuchse möglich ist.

In einer bevorzugten Ausführungsform nach Anspruch 2 ist der Rohrsteg-Fensterabschnitt als Fensterdeckel zumindest einseitig, vorzugsweise beidseitig gegenüberliegend über ein Filmscharnier mit dem angrenzenden Fensterbereich verbunden und weist an den Seiten ohne Scharnierverbindung freigeschnittene Spalte auf. Zudem können nach Anspruch 3 Filmscharniere als Sicken oder Doppelsicken ausgebildet sein. Weiter können nach Anspruch 4 beidseitig gegenüberliegende Filmscharniere in Axialrichtung oder in Querrichtung verlaufen. Filmscharniere sind einfach in Verbindung mit Fensterdeckel herstellbar und ergeben insbesondere in der Sickenausbildung eine weitgehende Entkopplung bei der Aufbringung der Vorspannung, so dass die Stützringteile und/oder Rohrstegteile nicht ungünstig mitverformt werden.

Bei einem bevorzugten Einbau der Lagerbuchse gemäß Anspruch 5, beispielsweise als Fahrerhauslager, wird die Lagerbuchse in ein Aufnahmeauge des zweiten zu lagernden Bauteils, beispielsweise eines Fahrerhauses eines LKW, mit etwa horizontaler Buchsenachse und vertikal übereinander liegenden Arbeitskammern mit entsprechend vertikal übereinanderliegenden Aussparungen im Außenrohr eingepresst. Eine so eingebaute Lagerbuchse ist dann besonders für eine gedämpfte elastische Abstützung vertikaler Belastungen geeignet.

Anhand einer Zeichnung wird die Erfindung näher erläutert.

Es zeigen:
- Fig. 1: einen Querschnitt durch eine elastische Lagerbuchse mit hydraulischer Dämpfung entlang der Linie A-A aus Fig. 2,
- Fig. 2: einen Längsschnitt durch die Lagerbuchse,
- Fig. 3: eine perspektivische Ansicht der Lagerbuchse,
- Fig. 4: eine perspektivische Ansicht eines erfindungsgemäßen Außenrohrs als einteiliges Käfigteil,
- Fig. 5: einen Längsschnitt durch die Lagerbuchse entlang der Linie C-C aus Fig. 1, und

Fig. 6 bis 8 unterschiedliche Ausführungsformen von Druckelementen.

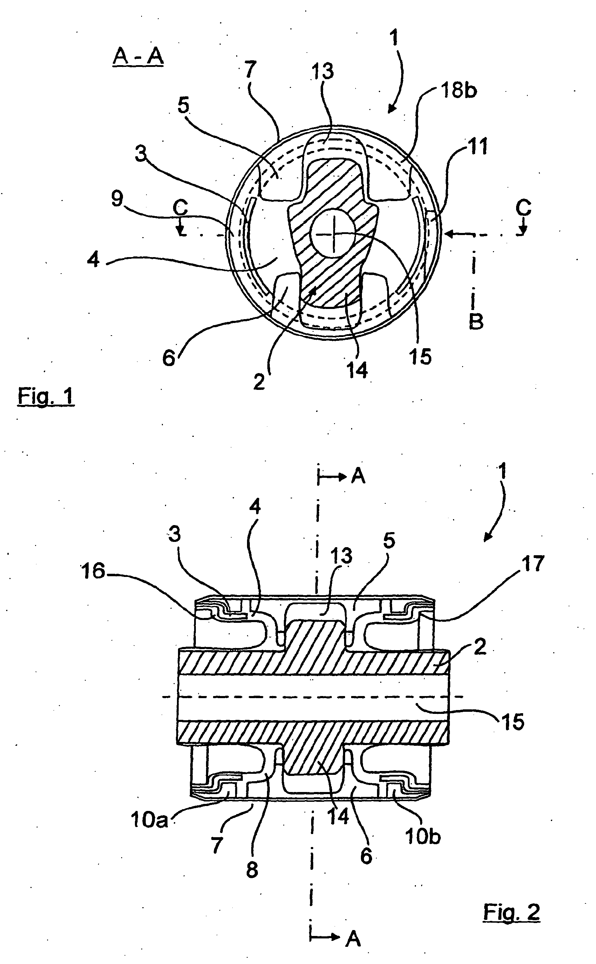

In den Fig. 1 bis 3 und 5 ist jeweils eine elastische Lagerbuchse 1 dargestellt, die aus einem Innenteil 2, einem erfindungsgemäßen Außenrohr 3 und einem Elastomerkörper 4 zwischen dem Innenteil 2 und dem Außenrohr 3 besteht.

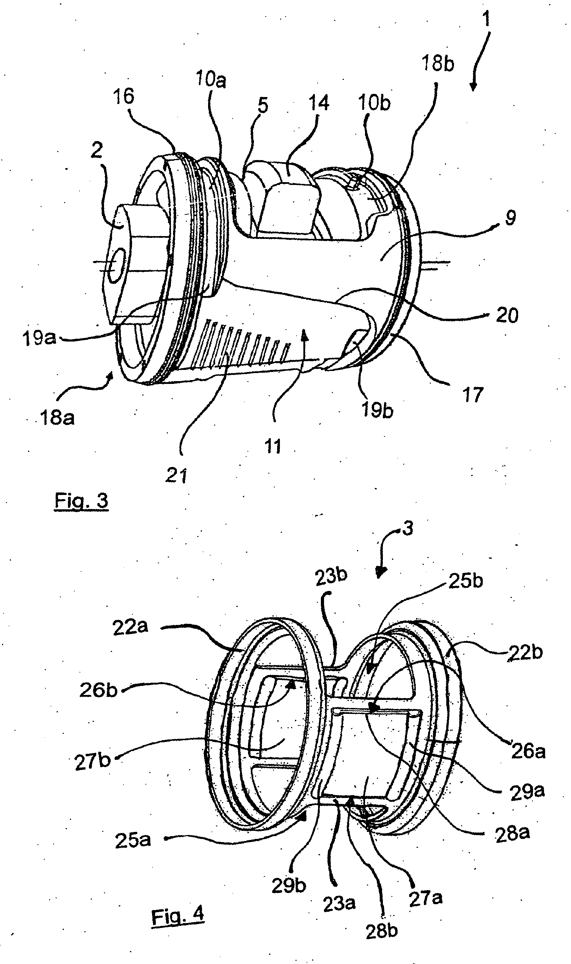

Zudem sind zwei radial gegenüberliegende, mit hydraulischer Flüssigkeit gefüllte Arbeitskammern ausgebildet (obere Arbeitskammer 5 und untere Arbeitskammer 6), die durch zugeordnete Aussparungen im Außenrohr 3 sowie im Elastomerkörper 4 und durch eine flüssigkeitsdicht abschließende Außenhülse 7 hergestellt sind. Wie aus den Fig. 1 und 2 ersichtlich, sind damit die Arbeitskammern 5, 6 bezüglich des Elastomermaterials an den jeweiligen Kammerböden von den beidseitigen stark dimensionierten Elastomerblöcken 24a, 24b und in den Seitenbereichen von zur Lagermitte eingezogenen dünnwandigeren Elastomerwänden 8 begrenzt. Bedingt durch die Ausnehmungen am Außenrohr 3 im Bereich der Arbeitskammern 5, 6 sind in Fig. 1 lediglich die gegenüberliegenden Rohrstegteile 23a, 23b des Außenrohrs 3 und entsprechen in Fig. 2 nur die eingeformten umlaufenden Stützringteile 22a, 22b des Außenrohrs 3 sichtbar, die näher in Verbindung mit Fig. 4 beschrieben werden.

Auf dem Außenrohr 3 ist radial außen eine Elastomerschicht 9 aufgebracht, in der ein Strömungskanal 10 mit seinen beiden Teilkanälen 10a, 10b sowie eine Übergangskonturkammer 11 eingeformt sind, wobei die Teilkanäle 10a, 10b und die Übergangskonturkammer 11 radial außen von der Außenhülse 7 flüssigkeitsdicht begrenzt sind.

Am Innenteil 2 sind in einem axial mittleren Bereich gegenüberliegende, mit Elastomermaterial 13 überzogene Anschläge 14 angeformt, die jeweils radial in die Arbeitskammern 5, 6 einragen. Das Innenteil 2 ist im Querschnitt nach unten konisch verjüngt ausgebildet. Es ist aus Kunststoff hergestellt mit einer zentralen Bohrung 15 zur Aufnahme einer metallischen Schwenkachse.

In Fig. 3 ist eine perspektivische Ansicht der elastischen Lagerbuchse 1, jedoch ohne die Außenhülse 7 gezeigt. Es sind hier deutlich das Innenteil 2, die obere Arbeitskammer 5 mit dem oberen Anschlag 14, sowie die stirnseitig umlaufenden Ringbereiche 16 und 17 mit den aus Elastomermaterial geformten Dichtlippen für die Außenhülse 7 erkennbar. Zudem ist die Elastomerschicht 9 zu ersehen, in die die Teilkanäle 10a, 10b und die Übergangskonturkammer 11 eingeformt sind.

Die Teilkanäle 10a und 10b verlaufen jeweils seitlich neben den Arbeitskammern 5 und 6. Dabei ist der Teilkanal 10b mit der oberen Arbeitskammer 5 über eine seitliche Kammerausgangsöffnung 18b verbunden. Von dort läuft der Teilkanal 10b an der oberen Arbeitskammer 5 und der unteren Arbeitskammer 6 in Umfangsrichtung vorbei und mündet an der Einmündung 19b in die Übergangskonturkammer 11.

Entsprechend beginnt der andere Teilkanal 10a an einer (in Fig. 3 nicht zu ersehenden) Kammerausgangsöffnung 18a der unteren Arbeitskammer 6 und verläuft neben der unteren Arbeitskammer 6 und der oberen Arbeitskammer 5 in der entgegengesetzten Umfangsrichtung bis zur Einmündung 19a in die Überganskonturkammer 11. In der Übergangskonturkammer 11 ist die Strömungsverbindung zwischen den Teilkanälen 10a, 10b bzw. deren Einmündungen 19a, 19b hergestellt.

Die Übergangskonturkammer 11 ist teilweise als Zylinderabschnitt ausgebildet mit einer vertikalstehenden Abschnittsfläche. Die obere Begrenzung 20 der Stromführungskontur hat einen strömungsoptimierten Kurvenverlauf zwischen den Einmündungen 19a und 19b, wobei zusätzlich im unteren Bereich der Übergangskonturkammer 11 unterhalb und seitlich zur Einmündung 19a vertikal ausgerichtete Längslamellen 21 angeformt, deren obere Verbindungslinie einer unteren Begrenzung der Stromführungskontur etwa parallel mitlaufend mit der oberen Begrenzung 20 entspricht.

In Fig. 4 ist eine erste Ausführungsform des erfindungsgemäßen Außenrohrs 3 als einteiliges Käfigteil, vorzugsweise aus Metall, gezeigt mit stirnseitig umlaufend geschlossenen Stützringteilen 22a, 22b und mit zwei radial gegenüberliegenden die Stützringteile 22a und 22b axial verbindenden Rohrstegteilen 23a, 23b. Die Stützringteile sind radial außen bei der fertig hergestellten Lagerbuchse zur Ausbildung der stirnseitigen Ringbereiche 16, 17 und der Dichtlippen mit Elastomermaterial überzogen. Die Rohrstegteile 23a, 23b sind den beiden gegenüberliegenden Elastomerblöcken 24a, 24b des Elastomerkörpers 4 zugeordnet und dort eingeformt. Zwischen den Rohrstegteilen sind die Aussparungen 25a, 25b für die Arbeitskammern 5, 6 ausgespart.

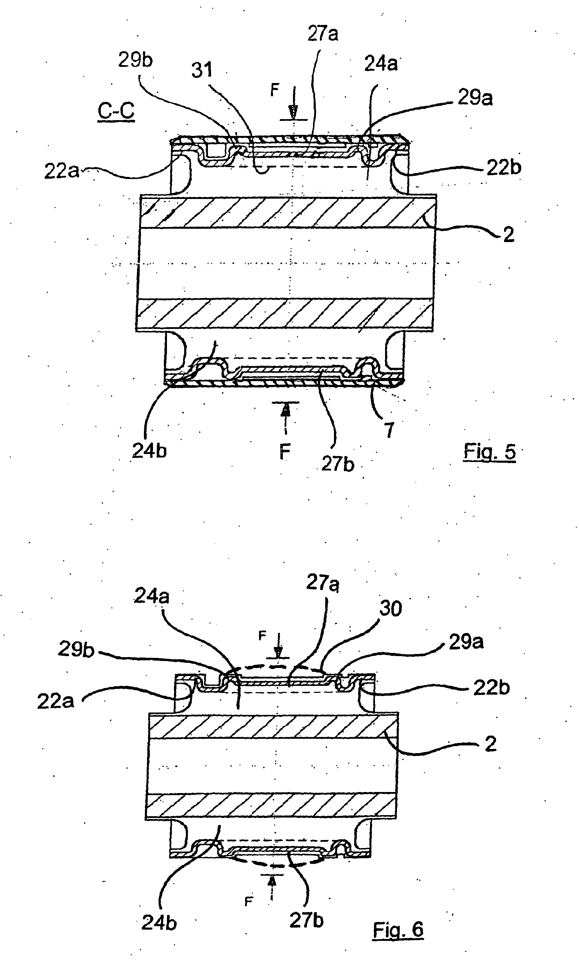

In den Rohrstegteilen 23a, 23b sind jeweils Fenster 26a, 26b angebracht, welche bei den Ausführungsformen der Figuren 5 bis 8 mit Druckelementen in der Art von Fensterdeckeln 27a, 27b abgedeckt sind. Diese Fensterdeckel 27a, 27b sind materialeinheitlich mit den Rohrstegteilen 23a, 23b aus den Rohrsteg-Fensterabschnitten gebildet, die hier jeweils mit in Axialrichtung freigeschnittenen Spalten 28a, 28b freigelegt und jeweils axial gegenüberliegend durch scharnierartig wirkende Sicken 29a, 29b mit dem angrenzenden Fensterbereich verbunden sind. Die Lage der Spalte und Freischnitte könnte vertauscht sein. Auch eine nur einseitige Scharnierverbindung wäre möglich.

In Fig. 5 ist ein Längsschnitt mit der ersten Ausführungsform eines Außenrohrs 3 entlang der Linie C-C aus Fig. 1 gezeichnet, so dass hier eine Draufsicht auf die geschnittenen, bereits unter Vorspannung stehenden Elastomerblöcke 24a, 24b mit bereits aufgesteckter und aufgepresster Außenhülse 7 gezeigt ist. In Fig. 6 ist dazu für die erste Ausführungsform strichliert die radiale Auswölbung 30 vor dem Aufstecken der Außenhülse 7 dargestellt, die durch eine entsprechende nach radial außen weisende Biegung der Fensterdeckel mit darunterliegendem Elastomermaterial und/oder durch aufgebrachtes Elastomermaterial gebildet sein kann. Beim Aufstecken der Außenhülse wird dann diese radiale Auswölbung 30 nach radial innen verdrängt, wie in Fig. 5 dargestellt, wodurch in den Elastomerblöcken 24a, 24b eine Vorspannung aufgebracht wird. Das dabei radial nach innen verdrängte Elastomermaterial ist jeweils durch die strichlierten Linien 31 und die beim Aufstecken der Außenhülse nach radial innen wirkende Kraft durch die Pfeile F angedeutet.

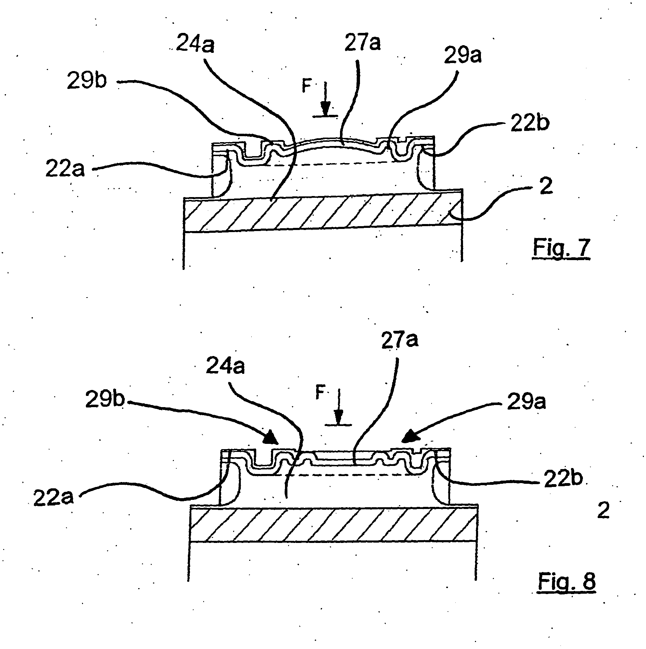

In den Fig. 7 und 8 ist jeweils bereits der vorgespannte Zustand gezeichnet, wobei die dazu bereits aufgesteckte Außenhülse 7 nicht dargestellt ist. In der zweiten modifizierten Ausführungsform eines Außenrohrs 3 nach Fig. 7 weist der Fensterdeckel 27a eine auch im vorgespannten Zustand bleibende Biegung nach außen auf. In der dritten modifizierten Ausführungsform nach Fig. 8 sind für eine Kraftentkopplung zu den Stützringteilen 22a, 22b hin die Sicken 29a, 29b als Doppelsicken ausgebildet.

## Patentansprüche

1. Außenrohr für eine elastische Lagerbuchse mit hydraulischer Dämpfung, welche aus einem Innenteil (2) zur Verbindung mit einem ersten zu lagernden Bauteil und einem Außenrohr (3) mit dazwischen liegendem Elastomerkörper (4) und einer Außenhülse (7) besteht, sowie zwei, radial gegenüberliegende, mit hydraulischer Flüssigkeit gefüllte und durch wenigstens einen Strömungskanal (10a, 10b) verbundene Arbeitskammern (5, 6) aufweist, die durch zugeordnete Aussparungen im Außenrohr (3) und im Elastomerkörper (4) sowie durch die flüssigkeitsdicht abschließende Außenhülse (7) gebildet sind, wobei das Außenrohr (3) als einteiliges Käfigteil ausgebildet ist, mit jeweils einem stirnseitig umlaufend geschlossenen Stützringteil (22a, 22b) und mit zwei radial gegenüberliegenden, die Stützringteile (22a, 22b) axial verbindenden Rohrstegteilen (23a, 23b), wobei zwischen den Rohrstegteilen (23a, 23b) die Aussparungen (25a, 25b) für die Arbeitskammern (5, 6) gebildet sind und die Rohrstegteile (23a, 23b) dem Elastomerkörper (4; 24a, 24b) zugeordnet sind,
**dadurch gekennzeichnet,**
**dass** in den Rohrstegteilen (23a, 23b) jeweils wenigstens ein Fenster (26a, 26b) angebracht ist, dem wenigstens ein Druckelement (31) zugeordnet ist, wobei das Druckelement in der Art eines Fensterdeckels (27a, 27b) unter Verwendung des Rohrsteg-Fensterabschnitts gebildet ist, der vorzugsweise im Elastomermaterial einformbar ist und vor dem Aufstecken der Außenhülse (7) durch eine nach radial außen weisende Biegung und/oder aufgebrachtes Elastomermaterial eine gegenüber dem Innendurchmesser der aufsteckbaren Außenhülse (7) radiale Auswölbung (30) aufweist, so dass beim Aufstecken der Außenhülse (7) der Fensterdeckel (27a, 27b) nach radial innen unter Aufbringung einer Vorspannung im Elastomerkörper (4; 24a, 24b) verlagerbar ist, ohne dabei die Stützringteile (22a, 22b) und/oder Rohrstegteile (23a, 23b) unzulässig zu verformen.

2. Außenrohr nach Anspruch 1, **dadurch gekennzeichnet, dass** der Rohrsteg-Fensterabschnitt als Fensterdeckel (27a, 27b) zumindest einseitig, vorzugsweise beidseitig gegenüberliegend über ein Filmscharnier (29a, 29b) mit dem angrenzenden Fensterbereich verbunden ist und an den Seiten ohne Scharnierverbindung freigeschnittene Spalte (28a, 28b) aufweist.

3. Außenrohr nach Anspruch 2, **dadurch gekennzeichnet, dass** das Filmschanier als Sicke (29a, 29b) oder Doppelsicke ausgebildet ist.

4. Außenrohr nach Anspruch 2 oder 3, **dadurch gekennzeichnet, dass** beidseitig gegenüberliegende Filmscharniere (29a, 29b) in Axialrichtung oder in Querrichtung verlaufen.

5. Außenrohr nach einem der Ansprüche 1 bis 3, **dadurch gekennzeichnet, dass** der Einbau der Lagerbuchse (1) durch Einpressen in ein Aufnahmeauge des zweiten zu lagernden Bauteils mit etwa horizontaler Buchsenachse und vertikal übereinanderliegenden Arbeitskammern (5, 6) bei entsprechender vertikal übereinanderliegenden zugeordneten Aussparungen im Außenrohr (3) erfolgt.

## Claims

1. Exterior sleeve for an elastic bush with hydraulic damping, said elastic bush comprising an inner part (2) for connection to a first component to be mounted and comprising an exterior sleeve (3) with an elastomer body (4) located in between and comprising an exterior shell (7) and having two radially opposite working chambers (5, 6) which are filled with hydraulic fluid, are connected by at least one flow duct (10a, 10b) and are formed by associated cutouts in the exterior sleeve (3) and in the elastomer body (4) and by the exterior shell (7) which is sealed in a liquid-tight manner, wherein the exterior sleeve (3) is designed as a single-part cage part, with in each case one supporting ring part (22a, 22b), the front side of which is peripherally closed, and with two radially opposite sleeve web parts (23a, 23b) axially connecting the supporting ring parts (22a, 22b), wherein the cutouts (25a, 25b) for the working chambers (5, 6) are formed between the sleeve web parts (23a, 23b), and the sleeve web parts (23a, 23b) are assigned to the elastomer body (4; 24a, 24b), **characterized in that** the sleeve web parts (23a, 23b) are each provided with at least one window (26a, 26b) to which at least one pressure element (31) is assigned, the pressure element being formed in the manner of a window cover (27a, 27b) making use of the sleeve web window portion which is preferably mouldable into the elastomer material and, before the exterior shell (7) is attached, has a radial bulge (30) in relation to the inside diameter of the attachable exterior shell (7), by means of a radially outwardly facing bend and/or applied elastomer material, such that, when the exterior shell (7) is attached, the window cover (27a, 27b) is shiftable radially inwards with a prestress being applied in the elastomer body (4; 24a, 24b) without impermissibly deforming the supporting ring parts (22a, 22b) and/or sleeve web parts (23a, 23b) in the process.

2. Exterior sleeve according to Claim 1, **characterized in that** the sleeve web window portion in the form of a window cover (27a, 27b) is connected at least on one side, preferably opposite on both sides via a film hinge (29a, 29b) to the adjacent window region and has gaps (28a, 28b) cut free on the sides without a hinge connection.

3. Exterior sleeve according to Claim 2, **characterized in that** the film hinge is designed as a bead (29a, 29b) or double bead.

4. Exterior sleeve according to Claim 2 or 3, **characterized in that** film hinges (29a, 29b) which are opposite on both sides run in the axial direction or in the transverse direction.

5. Exterior sleeve according to one of Claims 1 to 3, **characterized in that** the bush (1) is fitted by being pressed into a receiving eye in the second component to be mounted, with the bush axis approximately horizontal and with the working chambers (5, 6) located vertically one above the other and with correspondingly assigned cutouts located vertically one above the other in the exterior sleeve (3).

## Revendications

1. Tube extérieur pour un coussinet élastique avec un amortissement hydraulique, qui se compose d'une partie intérieure (2) pour le raccordement à un premier composant à stocker et à un tube extérieur (3) avec un corps élastomère (4) se trouvant entre ces derniers et d'une douille extérieure (7) et qui présente également deux chambres de travail (5, 6) se faisant face radialement, remplies de liquide hydraulique et reliées grâce au moins à un canal d'écoulement (10a, 10b), lesquelles chambres de travail étant formées par des évidements associés dans le tube extérieur (3) et dans le corps élastomère (4) ainsi que par la douille extérieure (7) isolante de manière étanche au fluide, sachant que le tube extérieur (3) est réalisé sous la forme d'une partie de cage d'un seul tenant, avec respectivement une partie de bague d'appui (22a, 22b) fermée sur le pourtour côté frontal et avec deux parties d'entretoise tubulaire (23a, 23b) se faisant face radialement, reliant de manière axiale les parties de bague d'appui (22a, 22b), sachant que les évidements (25a, 25b) pour les chambres de travail (5, 6) sont formés entre les parties d'entretoise tubulaire (23a, 23b), et en ce que les parties d'entretoise tubulaire (23a, 23b) sont associées au corps élastomère (4 ; 24a, 24b),
**caractérisé en ce que**
respectivement au moins une fenêtre (26a, 26b) est montée dans les parties d'entretoise tubulaire (23a, 23b), à laquelle fenêtre étant associé au moins un élément de pression (31), sachant que l'élément de pression est formé à la manière d'un couvercle de fenêtre (27a, 27b) en utilisant la section fenêtre-entretoise tubulaire qui peut être formée de préférence dans un matériau élastomère et qui présente, avant la mise en place de la douille extérieure (7) dans une courbure orientée radialement vers l'extérieur et/ou un matériau élastomère appliqué à une partie bombée (30) disposée radialement par rapport au diamètre intérieur de la douille extérieure (7) pouvant être mise en place de telle sorte que lors de la mise en place de la douille extérieure (7), la couverture de fenêtre (27a, 27b) peut être déplacée radialement vers l'intérieur en appliquant une précontrainte dans le corps élastomère (4 ; 24a, 24b) sans déformer de manière inacceptable les parties d'anneau d'appui (22a, 22b) et/ou les parties d'entretoise tubulaire (23a, 23b).

2. Tube extérieur selon la revendication 1, **caractérisé en ce que** la section entretoise tubulaire-fenêtre est reliée sous la forme d'une couverture de fenêtre (27a, 27b) au moins d'un côté, de préférence des deux côtés de manière à se faire face à la zone de fenêtre adjacente par l'intermédiaire d'une charnière pelliculaire (29a, 29b), et **en ce qu'**elle présente au niveau des côtés sans raccordement par charnière des fentes (28a, 28b) dégagées.

3. Tube extérieur selon la revendication 2, **caractérisé en ce que** la charnière pelliculaire est réalisée sous la forme d'une moulure (29a, 29b) ou sous la forme d'une double moulure.

4. Tube extérieur selon la revendication 2 ou 3, **caractérisé en ce que** des charnières pelliculaires (29a, 29b) se faisant face des deux côtés s'étendent dans une direction axiale ou dans une direction transversale.

5. Tube extérieur selon l'une quelconque des revendications 1 à 3, **caractérisé en ce que** le montage du coussinet (1) se produit en enfonçant celui-ci dans un oeillet de réception du second composant à stocker avec un axe de coussinet à peu près horizontal et des chambres de travail (5, 6) se chevauchant de manière verticale dans le cas d'évidements associés correspondants dans le tube extérieur (3) se chevauchant de manière verticale.
